# EUROPEAN PATENT SPECIFICATION

(11) **EP 3 315 225 B1**
(45) Date of publication and mention of the grant of the patent: **13.03.2019**
(21) Application number: 16841713.7
(22) Date of filing: 26.08.2016
(51) Int. Cl.: B21K 1/76, B23P 15/14, B62D 3/12, F16H 55/26

(54) **RACK SHAFT AND METHOD FOR PRODUCING SAME**
ZAHNSTANGENWELLE UND VERFAHREN ZUR HERSTELLUNG DAVON
ARBRE À CRÉMAILLÈRE ET SON PROCÉDÉ DE PRODUCTION

(30) Priority: 03.09.2015 JP 2015173808
(43) Date of publication of application: 02.05.2018
(73) Proprietor: NSK Ltd., Tokyo 141-8560 (JP)
(72) Inventor: MIZUTANI, Hiroto, Maebashi-shi Gunma 371-8527 (JP)
(74) Representative: Mewburn Ellis LLP
(86) International application number: PCT/JP2016/074975
(87) International publication number: WO 2017/038681

(56) References cited:
- JP-A- S5 662 731
- JP-A- 2011 148 403
- JP-A- 2015 010 685

## Description

### TECHNICAL FIELD

The present invention relates to an improvement on a rack shaft which is incorporated in a steering device configuring, for example, an automobile steering device and which pushes and pulls a tie rod in accordance with axial displacement thereof, and an improvement on a manufacturing method thereof.

### BACKGROUND ART

As a mechanism for converting rotational motion which is input from a steering wheel into linear motion for providing a steering angle, there has been known a rack and pinion type steering device using a rack and a pinion. Such a rack and pinion type steering device can be configured to be small in size and lightweight and can obtain high rigidity and good steering performance, so the rack and pinion type steering device has been widely used.

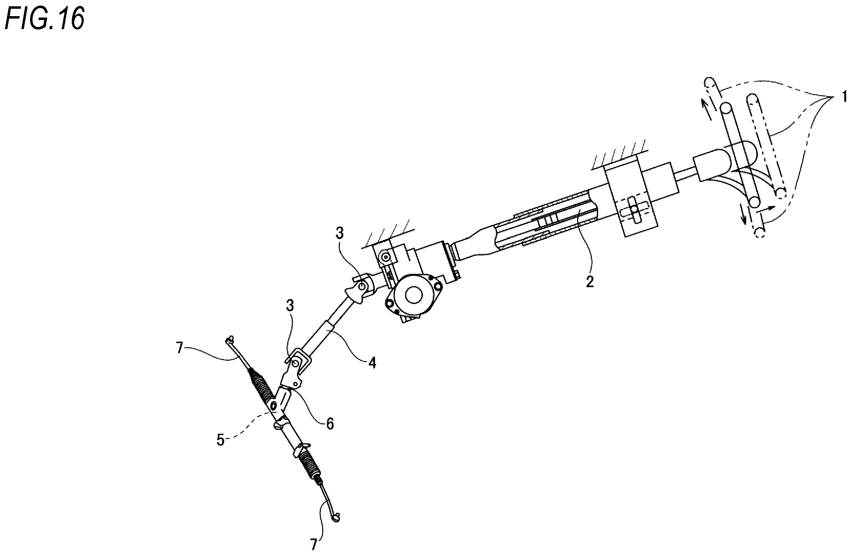

FIG. 16 shows one example of such a rack and pinion type steering device. In this steering device, a movement of a steering shaft 2 which rotates in accordance with an operation of the steering wheel 1 is transmitted to an input shaft 6 of a steering gear unit 5 via universal joints 3, 3 and an intermediate shaft 4. The steering gear unit 5 includes a pinion shaft which is rotatably driven by the input shaft 6, and a rack shaft meshed with the pinion shaft. When the pinion shaft rotates together with the input shaft 6, the rack shaft is displaced in an axial direction, and a pair of tie rods 7, 7 connected to both ends of the rack shaft are pushed and pulled to provide a desired steering angle to steered wheels.

As the steering gear unit as described above, there has been known a steering gear unit 5 with a variable gear ratio (VGR) structure in which a specific stroke is changed according to a rotation angle of the pinion shaft 8, for example as shown in FIG. 17 (see Patent Document 1). The specific stroke corresponds to an axial movement amount of the rack shaft 9 per rotation of the pinion shaft 8 (a rack shaft movement amount/one pinion rotation). In the steering gear unit 5 with the variable gear ratio structure, the specific stroke is set to a lower value in the vicinity of the center of the stroke (steering center side), and the specific stroke is set to a higher value at both ends of the stroke (steering end side), so that a tire turning angle with respect to a steering operation amount in the vicinity of the center of the steering wheel is reduced, and running stability during straight running can be improved.

The specific stroke is set by changing specifications of rack teeth 10 (pitch between teeth, a shape of teeth, an inclination angle of tooth trace, or the like) according to an axial position. Therefore, the rack teeth 10 includes a region where the specific stroke is constant and a region where the specific stroke changes. At the region where the specific stroke changes, a tooth surface (side surface) shape of the rack teeth 10 is a complicated curved surface shape. Therefore, it is difficult to form such rack teeth 10 by cutting processing, and the rack teeth 10 is generally formed by plastic processing (forging processing).

In the case of forming the rack teeth by the forging processing, there is an advantage that the shape of the rack teeth can be freely set by changing the shape of a forging die. However, in the forging processing, since the rack teeth are formed by using the plastic flow of the material, a large processing strain is accumulated in the rack teeth. Therefore, in order to improve the strength and wear resistance or the like of the rack teeth, if heat treatment is performed after the forging processing, large deformation would easily occur in the rack teeth, which makes it difficult to ensure required precision.

The steering device is required to provide smooth feeling for a steering operation by a driver. Therefore, it is desirable to improve meshing precision between the rack teeth and pinion teeth and to smoothly convert the operation of the steering wheel to displacement of the tie rod, so that high precision (dimensional precision, shape precision, or the like) is also required for the rack teeth. Particularly, a slight steering operation is frequently performed during vehicle straight running in order to maintain straight line stability or the like, so that it is important to realize the smooth feeling for such a steering operation. To this end, it is important to smooth an operation of the steering gear unit in the vicinity of a stroke center (axial center of the rack teeth). However, as described above, in a case where the rack teeth are formed by the forging processing, it is difficult to ensure precision of the rack teeth by deformation due to the subsequent heat treatment. Also, in order to ensure the precision of the rack teeth, it is necessary to repeat correction or the like of the forging die used for the forging processing, which causes an increase in development cost and an increase in manufacturing cost.

The document JP-A-2011-148403 (Patent Document 2) discloses an alternative method of manufacturing a rack shaft, as well as a rack shaft thereby obtained. The preamble of the independent claims 1, 2, 6, 7 is based on this document.

### PRIOR ART DOCUMENT

### PATENT DOCUMENT

Patent Document 1: JP-A-2015-10685
Patent Document 2: JP-A-2011-148403

### SUMMARY OF THE INVENTION

### PROBLEMS TO BE SOLVED BY THE INVENTION

In view of the circumstances as described above, an object of the present invention is to realize a rack shaft and a manufacturing method thereof, which can ensure necessary and sufficient precision of rack teeth at low cost.

### MEANS FOR SOLVING THE PROBLEM

Manufacturing methods of a rack shaft according to the present invention manufacture a rack shaft including rack teeth provided on a portion thereof in an axial direction, wherein a specific stroke is constant at least at a predetermined axial position of the rack teeth. The specific stroke corresponds to a movement amount of the rack shaft per rotation of a pinion shaft including pinion teeth meshed with the rack teeth.

In the present specification and claims, the predetermined axial position of the rack teeth refers to not only one point in the axial direction of the rack teeth but also a range (area) having a certain length.

In a manufacturing method of a rack shaft according to a first invention, rack teeth are formed by forging processing (hot forging, warm forging, or cold forging), and after heat treatment (for example, quenching treatment and tempering treatment) is performed, shaft bending correction processing is performed as necessary, and then, a finish processing (for example, grinding processing) is performed only on (a tooth surface, or a tooth surface and a tooth bottom) an axial center portion in which the specific stroke is constant in the rack teeth.

In a manufacturing method of a rack shaft according to a second invention, rack teeth are formed by forging processing (hot forging, warm forging, or cold forging), and after heat treatment (for example, quenching treatment and tempering treatment) is performed, shaft bending correction processing is performed as necessary, and then, a finish processing (for example, grinding processing) is performed only on (a tooth surface, or a tooth surface and a tooth bottom) an axial center portion and both axial end portions in which the specific stroke is constant in the rack teeth.

In the present specification and the claims, the axial center portion of the rack teeth refers to not only one point existing in the axial center but also refers to a range having a length including the axial center and the vicinity thereof.

In implementing the manufacturing method of the rack shaft according to the first invention and the second invention as described above, for example, at a same time as forming the rack teeth, a recessed groove for holding grease may be formed by the forging processing on a back surface of the rack shaft at a portion axially matching with a portion where the finish processing is performed.

In the present specification and the claims, the back surface of the rack shaft refers to a surface on an opposite side of the rack shaft when a surface facing the pinion shaft is referred to as a front surface.

In implementing the manufacturing method of the rack shaft according to the present invention, for example, the rack teeth may include a variable gear portion in which the specific stroke changes.

A rack and pinion type steering gear unit configured by the rack shaft and the pinion shaft having such a configuration is called as a steering gear unit with a variable gear ratio structure.

In implementing the manufacturing method of the rack shaft according to the present invention, for example, the specific stroke is constant over an entire axial length of the rack teeth.

A rack and pinion steering gear unit configured by the rack shaft and the pinion shaft having such a configuration is called as a steering gear unit with a constant gear ratio (CGR) structure.

A rack shaft according to the present invention includes rack teeth which is a forging processed portion at a portion in an axial direction, and a specific stroke is constant at least at a predetermined axial position of the rack teeth. The specific stroke corresponds to a movement amount of the rack shaft per rotation of a pinion shaft including pinion teeth meshed with the rack teeth.

In a rack shaft according to a third invention, a finish processed portion is provided only on a axial center portion, in which the specific stroke is constant, of the rack teeth in which a heat-treated hardened layer is formed at least on a surface layer portion. Stated differently, a finish processing is performed only on the axial center portion, in which the specific stroke is constant, in the rack teeth in which the heat treatment is performed after the forging processing.

Alternatively, in a rack shaft according to a fourth invention, a finish processed portion is provided only on an axial center portion and both the axial end portions, in which the specific stroke is constant, in the rack teeth in which the heat-treated hardened layer is formed at least on a surface layer portion. Stated differently, a finish processing is performed only on the axial center portion and both the axial end portions in which the specific stroke is constant in the rack teeth in which the heat treatment is performed after the forging processing.

Also, in implementing the rack shaft according to the third invention and fourth inventions as described above, for example, a recessed groove for holding grease may be provided on a back surface of the rack shaft at a portion axially matching with the finish processed portion provided on the rack teeth.

Also, in implementing the rack shaft of the present invention, for example, the rack teeth may include a variable gear portion in which the specific stroke changes.

Alternatively, the specific stroke may be constant over an entire axial length of the rack teeth.

### EFFECT OF THE INVENTION

According to the rack shaft and the manufacturing method thereof of the present invention, it is possible to obtain the rack shaft capable of ensuring necessary and sufficient precision of the rack teeth at low cost.

That is, according to the present invention, the rack teeth are formed by forging processing, and after the heat treatment is performed, finish processing is performed only on the axial center portion where the specific stroke of the rack teeth is constant, or the finish processing is performed only on the axial center portion and both axial end portions.

Therefore, even if precision of the rack teeth after the forging processing is set to be low or precision after heat treatment is set to be low (for example, the allowable bending value is set to be large), an operation of a steering gear unit can be smoothed in the axial center portion in which the finish processing is performed, and it is possible to realize smooth feeling for a steering operation which is frequently performed during vehicle straight running.

In this way, according to the present invention, since the finish processing is performed only on the axial center portion of the rack teeth in which the specific stroke is constant or performed only on the axial center portion and both the axial end portions, it is possible to smooth feeling during straight running which is particularly important for a driver, while slightly suppressing a finish processing range.

Also, it is possible to suppress the finish processing range, and it is not necessary to repeatedly correct a forging die used for the forging processing and to maintain precision of the forging die too high, and therefore, development cost and manufacturing cost can be reduced.

As a result, according to the present invention, it is possible to obtain the rack shaft capable of ensuring necessary and sufficient precision for realizing smooth feeling for the rack teeth at low cost.

Also, in a state where the steering gear unit is configured, since a recessed groove for holding grease is provided, the grease can be held between a rack guide supporting the back surface of the rack shaft and the recessed groove formed on the back surface of the rack shaft. Therefore, an operation characteristic of the steering gear unit at the axial center portion (in the vicinity of the stroke center) of the rack teeth can be well maintained over a long period of time. Also, the recessed groove can be processed at the same time as the rack teeth are processed by the forging processing. In addition, by suppressing the formation range of the recessed groove to a range where feeling characteristic is particularly important for the driver, an increase in manufacturing cost of the forging die can be suppressed. Therefore, the manufacturing cost of the rack shaft can be sufficiently reduced.

### BRIEF DESCRIPTION OF THE DRAWINGS

FIG. 1 is a cross-sectional view of a steering gear unit, illustrating a first embodiment of the present invention.
FIG. 2 is a cross-sectional view taken along a line II-II of FIG. 1.
FIG. 3A illustrates a specific stroke, and FIG. 3B illustrates a rack shaft taken out and seen from a front side in the first embodiment.
FIG. 4 is an enlarged view of an axial center portion of rack teeth according to the first embodiment.
FIG. 5 is a cross-sectional view illustrating a meshed state between the rack teeth and pinion teeth according to the first embodiment.
FIG. 6 is a flowchart illustrating one example of a manufacturing process of the rack shaft according to the first embodiment.
FIG. 7A to 7D are cross-sectional views illustrating forging processing in the order of steps according to the first embodiment.
FIG. 8 is a view corresponding to FIG. 3B illustrating a second embodiment of the present invention.
FIG. 9 is a view illustrating the rack shaft as viewed from three directions of a front side, a lateral side and a back side according to a third embodiment of the present invention.
FIG. 10 is an enlarged view of a center portion in an axial direction of a back surface of a rack shaft according to the third embodiment.
FIG. 11A to 11F are schematic diagrams illustrating six examples of recessed groove patterns which can be formed on the back surface of the rack shaft according to the third embodiment.
FIG. 12 is a view corresponding to FIG. 3B illustrating a fourth embodiment of the present invention.
FIG. 13 is a view corresponding to FIG. 3B illustrating a fifth embodiment of the present invention.
FIG. 14 is a view corresponding to FIG. 9 illustrating a sixth embodiment of the present invention.
FIGS. 15A and 15B are views illustrating a specific stroke according to a modified example of the present invention.
FIG. 16 is a view illustrating an example of an automobile steering device having a steering gear unit incorporating a rack shaft which is a subject of the present invention.

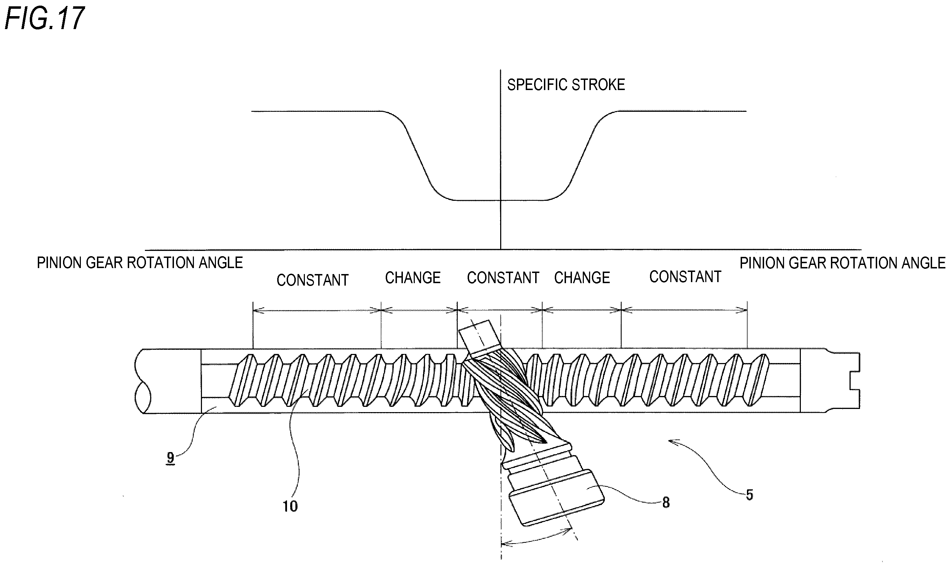

FIG. 17 is a view illustrating a specific stroke and a meshed portion between the rack shaft and a pinion shaft of a conventional steering gear unit.

### DESCRIPTION OF EMBODIMENTS

### [FIRST EMBODIMENT]

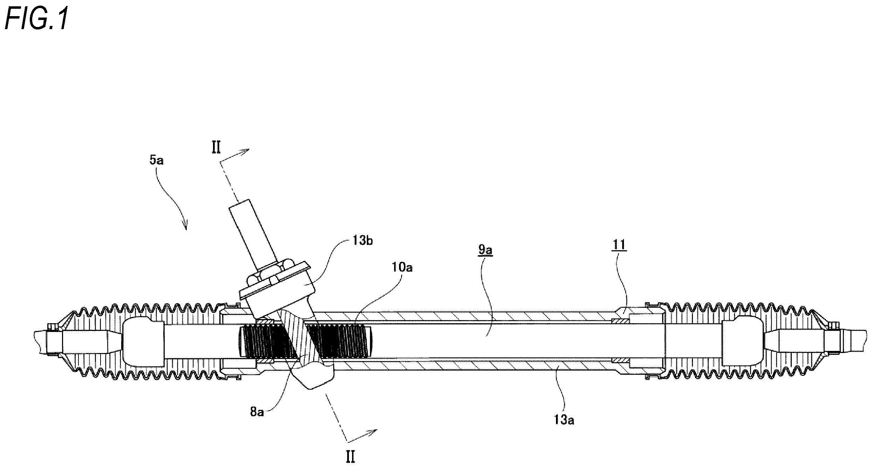

A first embodiment of the present invention will be described with reference to FIGS. 1 to 7D. The steering gear unit 5a of the present embodiment is a rack and pinion type steering gear unit with a variable gear ratio structure and includes a housing 11, a pinion shaft 8a, a rack shaft 9a, and a pressing unit 12.

The housing 11 is fixed to a vehicle body and integrally includes a cylindrical first accommodating body 13a opened at both ends to accommodate an axial intermediate portion of the rack shaft 9a, a bottomed cylindrical second accommodating body 13b opened only at one end to accommodate a front half portion of the pinion shaft 8a, and a third accommodating body 13c to accommodate the pressing unit 12.

The pinion shaft 8a includes pinion teeth 14 at a tip end side portion of an outer peripheral surface. The pinion shaft 8a is supported by a pair of rolling bearings 15a, 15b to be only rotatably with respect to the second accommodating body 13b in a state where the front half portion is inserted inside the second accommodating body 13b.

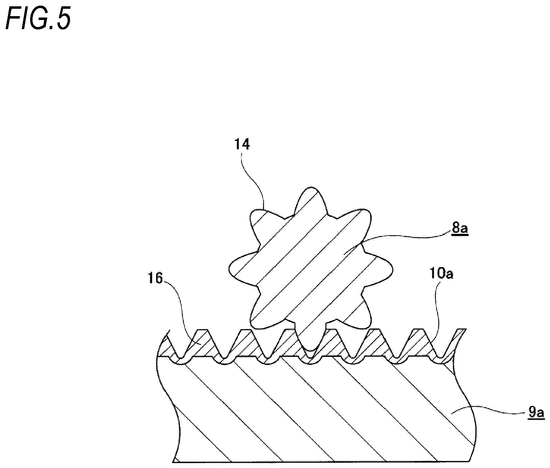

The rack shaft 9a is made of a metal material such as carbon steel, stainless steel, or the like, and rack teeth 10a which is a forging processed portion formed by forging processing is provided on one axial end side portion on a front surface (a left end side portion in FIG. 1). The outer peripheral surface of the rack shaft 9a is a cylindrical surface except for the portion where the rack teeth 10a are formed. That is, at a portion deviated from the rack teeth 10a in the axial direction, the cross-sectional shape of the outer peripheral surface of the rack shaft 9a is round, and at a portion where the rack teeth 10a are formed in the axial direction, a portion corresponding to the rack teeth 10a is a straight line, and a remaining portion is an arc shape. As shown in FIG. 5, a heat-treated hardened layer 16 having, for example, a hardness of Hv500 or more is formed on a surface layer portion of the rack teeth 10a.

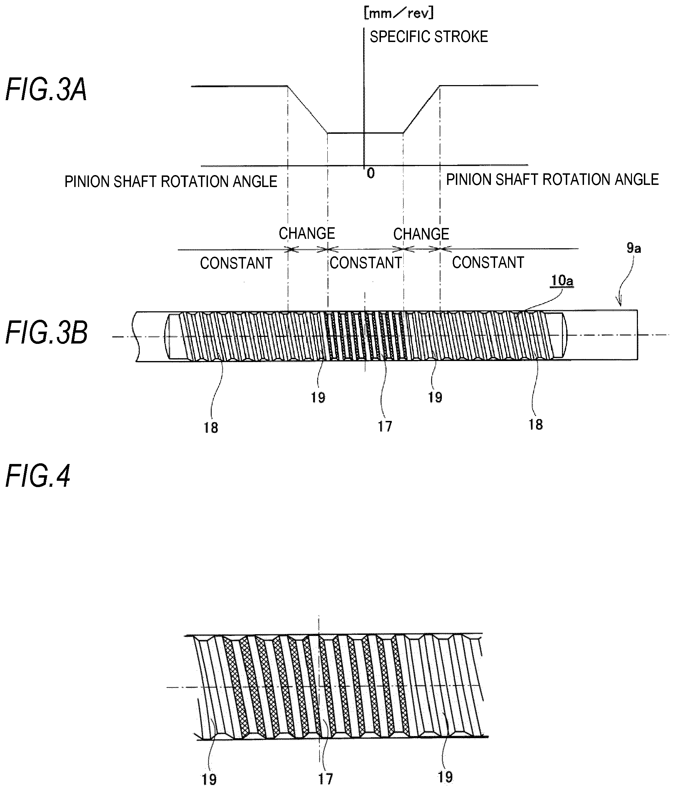

In the steering gear unit 5a of the present embodiment, a specific stroke corresponding to an axial movement amount of the rack shaft 9a per rotation of the pinion shaft 8a (steering wheel) (a rack shaft movement amount/one pinion rotation) is changed according to a rotation angle of the pinion shaft 8a. Specifically, as shown in FIG. 3A, the specific stroke is set to be constant with a low value in the vicinity of a stroke center (steering center side), the specific stroke is set to be constant with a high value at both ends of the stroke (steering end side), and the specific stroke is set to change at a portion between the vicinity of the stroke center and the stroke end.

Accordingly, specifications of the rack teeth 10a (pitch between teeth, a shape of teeth, an inclination angle of the tooth trace, or the like) are changed according to an axial position. Specifically, as shown in FIG. 3B, an axial center portion of the rack teeth 10a (a range in which the rotation angle of the pinion shaft 8a is, for example, 0° to ± 90°) is defined as a center side non-variable gear portion 17, the tooth trace of the rack teeth 10a is a linear shape (the tooth surface is a flat surface shape), and the pitch between the teeth is set small. Both axial end portions of the rack teeth 10a (a range in which the rotation angle of the pinion 8a is, for example, less than -180° and a range in which the rotation angle is more than +180°) is defined as end side non-variable gear portions 18, 18, the tooth trace of the rack teeth 10a is linear shape (the tooth surface is flat surface shape), and the pitch between the teeth is set large. The axial intermediate portion of the rack teeth 10a (a portion between the center side non-variable gear portion 17 and the end side non-variable gear portion 18, in which the rotation angle of the pinion 8a is, for example, a range which is between -180° and -90° and a range which is between +90° and +180°) is defined as variable gear portions 19, 19, the tooth trace of the rack teeth 10a is curved shape (tooth surface is curved shape), and the inclination angle (torsion angle) and the pitch between the teeth are changed gradually as proceeding toward the end portion side in the axial direction.

In the present embodiment, only the tooth surface (side surface) of the center side non-variable gear portion 17 of the rack teeth 10a, in which a diagonal lattice pattern is applied as shown in FIGS. 3 and 4, is a finish processed portion in which finish processing is performed with higher dimensional precision and shape precision compared with the other portions (the end side non-variable gear portions 18, 18 and the variable gear portions 19, 19).

The pressing unit 12 configuring the steering gear unit 5a is accommodated inside the third accommodating body 13c and includes a rack guide 40 and a spring 41. A pressing surface which is a tip end surface of the rack guide 40 is brought into contact with a portion on an opposite side of the pinion shaft 8a with respect to the rack shaft 9a on the back surface of the rack shaft 9a such that the rack shaft 9a is axially slidable. In this state, the rack guide 40 is elastically pressed by the spring 41 toward the back surface of the rack shaft 9a. By providing a preload to the meshed portion between the pinion teeth 14 and the rack teeth 10a, it is possible to suppress the occurrence of abnormal noise at the meshed portion and improve the operation feeling of a steering device. The rack guide 40 is made of a low friction material in its entirely or has a low friction material layer on the pressing surface which is slidably in contact with the back surface of the rack shaft 9a.

Next, a manufacturing method of the rack shaft 9a configuring the steering gear unit 5a with the variable gear ratio structure according to the present embodiment will be described.

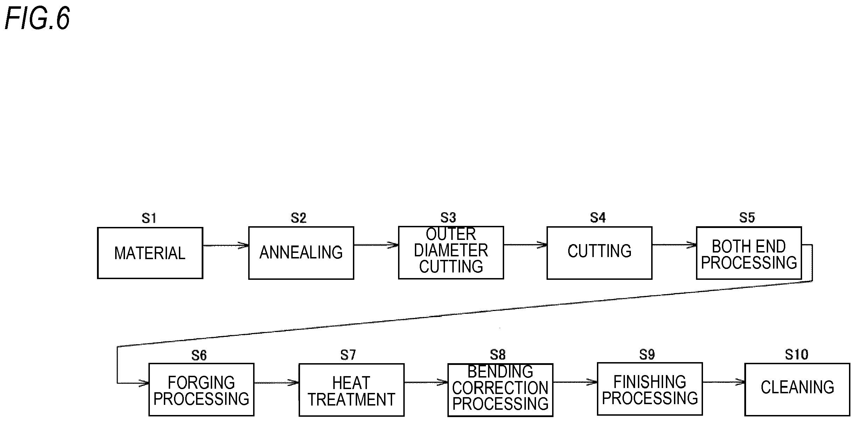

The rack shaft 9a of the present embodiment is manufactured in the order of steps as shown in FIG. 6, for example.

First, in Step 1 (S1), a coil material or a bar material (rod-shaped member) having a circular sectional shape made of a metal material such as carbon steel, stainless steel, or the like is prepared.

Next, in step 2 (S2), internal strain of the material is removed by performing an annealing treatment on the material.

Next, in step 3 (S3), an outer diameter size of the material is adjusted to a desired size by performing an outer diameter grinding or drawing processing on the material in which the annealing treatment is performed.

Next, in step 4 (S4), a columnar intermediate material having a predetermined length is obtained by cutting the material in which the treatment is performed, into the predetermined length.

Next, in step 5 (S5), a screw hole for screw-fixing a ball joint is formed on each end surface of the intermediate material by performing both ends processing on the intermediate material.

Next, in step 6 (S6), the rack teeth 10a is formed by performing cold forging processing (plastic processing) on one axial end side portion of the front surface on the intermediate material (a first intermediate material 20) in which both ends processing is performed.

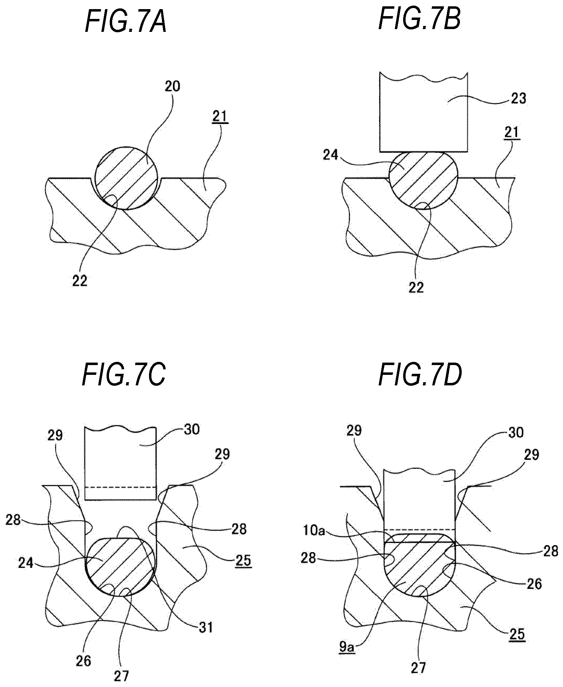

Specifically, as shown in FIG. 7A, a first intermediate material 20 having a circular rod shape is set (placed) in a recessed groove portion 22 which has a circular arc shaped cross section and is provided on an upper surface of a receiving die 21. The radius of curvature of an inner surface of the recessed groove portion 22 substantially coincides with the radius of curvature of the back surface portion of the rack shaft 9a (except for a spring back amount due to the release of processing force).

Next, as shown in FIG. 7B, upset forging processing is performed in which the first intermediate material 20 is strongly pressed toward the recessed groove portion 22 by the tip end surface (lower end surface) of a pressing punch 23 which is long along the recessed groove portion 22. The shape of the tip end surface of the press punch 23 is generally a flat surface. However, the shape of the tip end surface of the press punch 23 may be a recessed curved surface having a large radius of curvature in relation to the width direction (left and right direction in FIG. 7) of the recessed groove portion 22 or a recessed shape (like embracing the upper end of the shape after the upset forging processing) in which both width end portions protrude linearly or in curve toward the receiving die 21. In any case, in the upset forging processing shown in FIG. 7B, the portion for forming the rack teeth 10a is crushed in the vertical direction at one axial portion of the first intermediate material 20, and the width dimension in the width direction is expanded to obtain a second intermediate material 24.

Next, the second intermediate material 24 is taken out from the recessed groove portion 22 of the receiving die 21 and inserted (set) into a bottom portion of a holding hole 26 provided in a die 25 as shown in FIG. 7C. The holding hole 26 has a U-shaped cross-sectional shape, and the radius of curvature of the bottom portion 27 substantially coincides with the radius of curvature of the inner surface of the recessed groove portion 22 of the receiving die 21. A pair of inner surfaces 28, 28 configuring the holding hole 26 are parallel flat surface. An upper end opening portion of the holding hole 26 include a pair of guide inclined surface portions 29, 29 inclined in a direction in which the intervals therebetween are expanded upward.

After the second intermediate material 24 is set to the holding hole 26 of the die 25, as shown from FIG. 7C to FIG. 7D, a tooth forming punch 30 is inserted into the holding hole 26, and the second intermediate material 24 is strongly pushed by this tooth forming punch 30 in the holding hole 26. The lower surface of this tooth forming punch 30 has a molding concave-convex which matches with the rack teeth 10a to be obtained (the concave-convex are reversed to the shape after completion). The second intermediate material 24 is restricted by the inner surface of the holding hole 26, except for the flat surface portion 31 where the rack teeth 10a is to be formed. Therefore, by pushing the second intermediate material 24 strongly into the holding hole 26 by the tooth forming punch 30, the flat surface portion 31 of the second intermediate material 24 is plastically deformed along with the concave-convex shape and processed into the rack shaft 9a having the rack teeth 10a as shown in FIG. 7D. In order to further improve the shape precision and the dimensional precision of the rack teeth 10a, sizing processing can be performed after the process in FIG. 7D as necessary.

Next, in step 7 (S7), by performing heat treatment on the rack shaft 9a subjected to the forging processing (tooth processing), the mechanical properties such as hardness of the rack teeth 10a is improved. Specifically, in the present embodiment, hardening heat treatment including carburizing or carbonitriding treatment, quenching treatment and tempering treatment is performed on the rack teeth 10a, and a heat-treated hardened layer 16 having a hardness of Hv500 or more is formed on the surface layer portion (for example, a range from the surface to a depth of 5 to 15 mm) of the rack teeth 10a. However, instead of the heat treatment process as described above, for example, induction hardening treatment can be performed.

Next, in step 8 (S8), a straightening processing such as bending correction processing is performed on the rack shaft 9a in which heat treatment is performed.

Next, in step 9 (S9), the finish processing (surface finish processing) is performed only on the axial center portion (the center side non-variable gear portion 17) of the rack teeth 10a of the rack shaft 9a in which the bending correction processing is performed. Specifically, the finish processing (a surface finishing treatment) by grinding processing is performed only on the tooth surface (side surfaces, an oblique lattice pattern portions in FIGS. 3 and 4) of the center side non-variable gear portion 17. Accordingly, the finish processed portion is formed on the center side non-variable gear portion 17.

Then, in the last step 10 (S10), the rack shaft 9a is cleaned, and the manufacturing operation of the rack shaft 9a is completed.

According to the rack shaft 9a configuring the steering gear unit 5a of the present embodiment which is manufactured by the process as described above, it is possible to ensure necessary and sufficient precision for the rack teeth 10a while suppressing the cost.

That is, in the present embodiment, the rack teeth 10a are formed by the cold forging processing, and after heat treatment is performed, the finish processing is performed only on the axial center portion (the center side non-variable gear portion 17) in which the specific stroke is constant in the rack teeth 10a. Therefore, even if the precision of the rack teeth 10a after the forging processing is set to be low or precision after the heat treatment is set to be low (for example, allowable bending value is set to be large), it is possible to smooth an operation of the steering gear unit 5a in the axial center portion (the center side non-variable gear portion 17) in which the finish processing is performed, and it is possible to realize smooth feeling for a steering operation which is frequently performed during vehicle straight running.

As described above, in the present embodiment, since the finish processing is performed only on the axial center portion (the center side non-variable gear portion 17) of the rack teeth 10a in which the specific stroke is constant, it is possible to smooth feeling during straight running which is particularly important for a driver, while suppressing the finish processing range. Also, since it is not necessary to repeatedly correct a forging die used for the forging processing and to maintain precision of the forging die (die 25, the tooth forming punch 30) too high while slightly suppressing the finish processing range, development cost and manufacturing cost can be also suppressed. As a result, in the present embodiment, it is possible to obtain the rack shaft 9a capable of ensuring necessary and the sufficient precision for realizing smooth feeling in the rack teeth 10a at low cost. Also, in the present embodiment, since the specific stroke is set as shown in FIG. 3A, it is possible to reduce a tire turning angle with respect to a steering operation amount in the vicinity of the center of the steering wheel and to improve running stability during straight running.

### [SECOND EMBODIMENT]

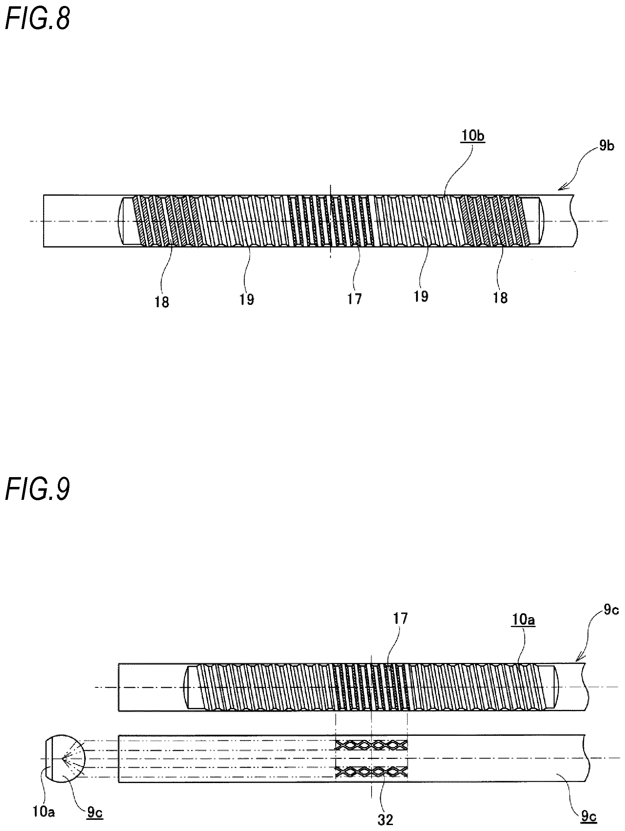

A second embodiment of the present invention will be described with reference to FIG. 8. The present embodiment differs from the first embodiment in that finish processing such as grinding processing is performed not only on (the tooth surface, an oblique lattice pattern portion in FIG. 8) the center side non-variable gear portion 17 provided on the axial center portion of the rack teeth 10a formed on the axial portion of the front surface of a rack shaft 9b, but also on (the tooth surface) end side non-variable gear portions 18, 18 provided on both axial end portions, and finish processed portions (an oblique line pattern portion in FIG. 8) are provided on these portions

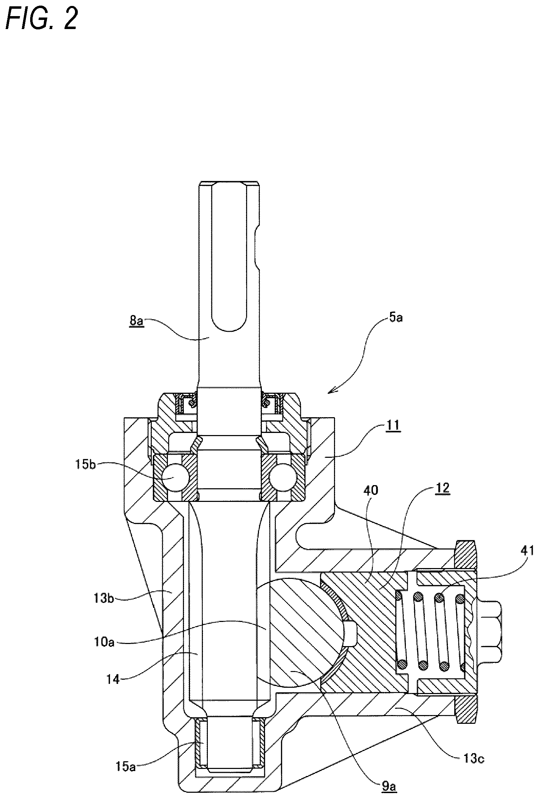

According to the rack shaft 9b of the present embodiment as described above, it is possible to improve a returning performance of a steering wheel. That is, if dimensional precision and shape precision of the end side non-variable gear portions 18, 18 in the rack teeth 10a are insufficient, so that frictional resistance with the pinion teeth 14 (see FIGS. 2 and 5) is increased, there is a possibility that easiness of return (easiness of return when the steering wheel is turned away to the vicinity of the stroke end or easiness of return by self-aligning torque) of the steering wheel will be worse. On the other hand, in the present embodiment, since the dimensional precision and the shape precision of the end side non-variable gear portions 18, 18 can be improved, it is possible to suppress the frictional resistance with the pinion teeth 14 to be low, so that returning performance of the steering wheel can be improved.

Other configurations and operations including the manufacturing method of the rack shaft 9b other than finish processing are the same as the first embodiment.

### [THIRD EMBODIMENT]

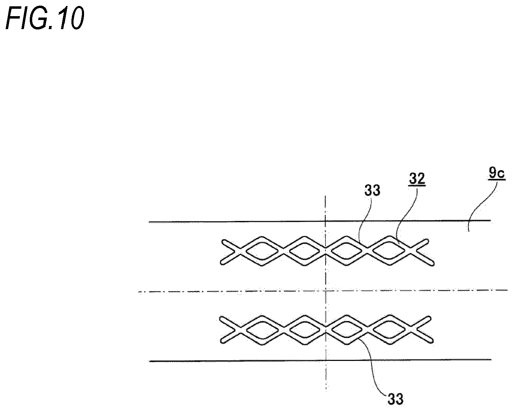

A third embodiment of the present invention will be described with reference to FIGS. 9 to 11F. The present embodiment differs from the first embodiment in that the recessed groove 32 for holding grease is provided on the back surface of the rack shaft 9c at the portion axially matching with the center side non-variable gear portion 17 in which finish processing is performed.

In the present embodiment, for example, by forming a concavo-convex portion for processing the recessed groove 32 in the bottom portion 27 of the holding hole 26 of the die 25 as shown in FIG. 7D, the recessed groove 32 is formed by forging processing at the same time as the rack teeth 10a is formed on the front face of the rack shaft 9c. The recessed groove 32 is formed only in a portion in contact with the pressing surface of the rack guide 40 (see FIG. 2) and is configured by a pair of oblique lattice shape recessed groove portions 33, 33, as if continuous diamond patterns are arranged in the axial direction and disposed on a circumferentially spaced state on the back surface of the rack shaft 9c.

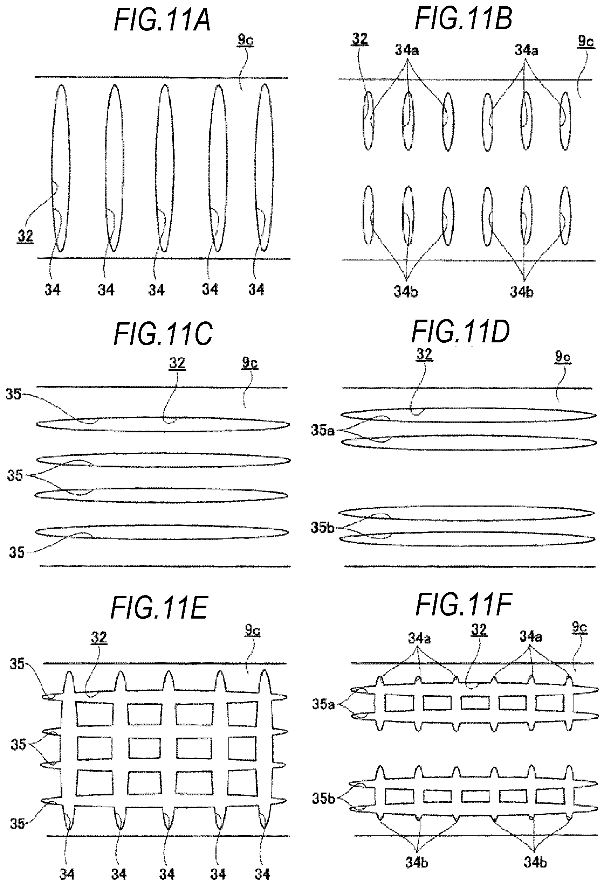

However, the shape of the recessed groove 32 is not limited to the above-described shape, and for example, a shape as shown in FIGS. 11A to 11F can be adopted. Specifically, as shown in Fig. 11A, circumferential recessed groove portions 34, 34, which is long in the circumferential direction extending over the entire width (vertical direction entire width in FIG. 11) may be formed axially at equal intervals on the back surface of the rack shaft 9c. As shown in FIG. 11C, axial recessed groove portions 35, 35 extending in the axial direction may be formed circumferentially at equal intervals on the back surface of the rack shaft 9c. As shown in FIG. 11E, it is also possible to adopt a structure as if the circumferential recessed groove portions 34, 34 in FIG. 11A and the axial recessed groove portions 35, 35 in FIG. 11C are overlapped (combined). Also, as shown in FIG. 11B, the circumferentially recessed circumferential recessed groove portions 34a, 34b, which is long in the circumferential direction in which an half portion (an upper half portion of FIG. 11) and another half portion (a lower half portion of FIG. 11) of the back surface of the rack shaft 9c are spaced apart from each other, may be formed axially at equal intervals. As shown in FIG. 11D, the axial recessed groove portions 35a, 35b extending in the axial direction may be formed on the back surface of the rack shaft 9c in a state of being deviated to the half portion and the other half portion of the back surface of the rack shaft 9c. As shown in FIG. 11F, it is also possible to adopt a structure in which the circumferential recessed groove portions 34a, 34b of FIG. 11B and the axial recessed groove portions 35a, 35b of FIG. 11D are combined.

Regardless of which shape is adopted, in the present embodiment, in a state where the steering gear unit 5a (see FIGS. 1 and 2) is configured, grease can be held between the rack guide 40 (see FIG. 2) supporting the back surface of the rack shaft 9c and the recessed groove 32 formed on the back surface of the rack shaft 9c. Therefore, it is possible to appropriately maintain an operation characteristic of the steering gear unit 5a in the vicinity of the center of the stroke over a long period of time. Also, in the present embodiment, the recessed groove 32 can be processed at the same time as the rack teeth 10a is processed by cold forging processing. In addition, since the formation range of the recessed groove 32 is suppressed to a range where the feeling characteristic is particularly important for a driver, an increase in the manufacturing cost of a forging die can be suppressed. Therefore, the manufacturing cost of the rack shaft 9c can be sufficiently suppressed.

Other configurations and operations including the manufacturing method of the rack shaft 9c other than forging processing are the same as the first embodiment.

The formation range of the recessed groove 32 may include at least a portion axially matching with the center side non-variable gear portion 17. That is, the formation range of the recessed groove 32 may be longer than that of the center side non-variable gear portion 17.

### [FOURTH EMBODIMENT]

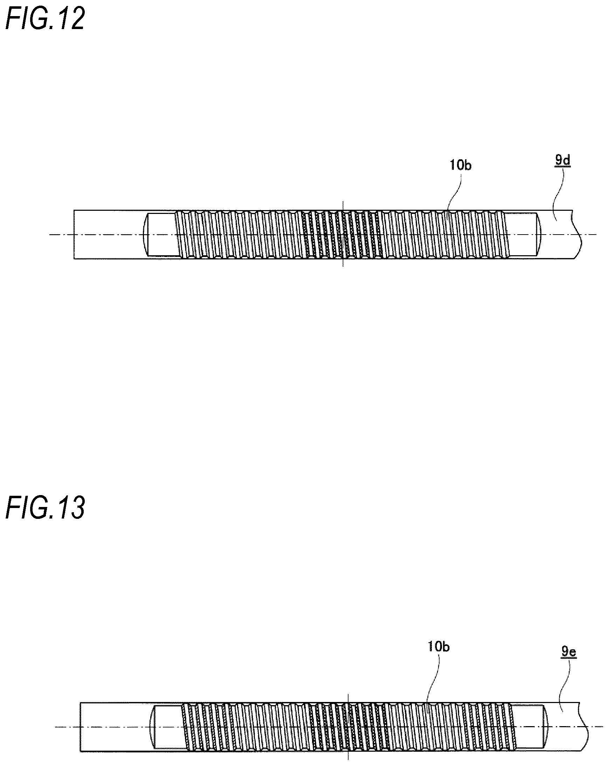

A fourth embodiment of the present invention will be described with reference to FIG. 12. In the present embodiment, specifications of rack teeth 10b formed on the axial portion of the front surface of a rack shaft 9d are different from the first to third embodiments. That is, in the steering gear unit 5b of the present embodiment, a specific stroke corresponding to an axial movement amount of the rack shaft 9d per rotation of the pinion shaft 8a (a rack shaft movement amount/one pinion rotation) (see FIGS. 1 and 2) is constant without changing according to a rotation angle of the pinion shaft 8a. Therefore, in the present embodiment, the specifications of the rack teeth 10b (pitch between the teeth, shape of tooth, inclination angle of tooth trace, or the like) are constant without change according to the axial position, so that the specific stroke is constant over an entire axial length range of the rack teeth 10b.

As described above, the present embodiment is directed to the rack shaft 9d configuring the steering gear unit with a constant gear ratio (CGR) structure. In a rack shaft 9d, similarly to the first embodiment, the finish processing such as grinding processing is performed only on (the tooth surface of) an axial center portion of the rack teeth 10, and a finish processed portion is provided on this portion (an oblique lattice pattern portion in FIG. 12).

In the present embodiment, even when the rack teeth 10b is processed by forging processing which can suppress the manufacturing cost as compared with cutting processing, it is possible to smooth the feeling characteristic during straight running which is particularly important for a driver.

Other configurations and operations including the manufacturing method of the rack shaft 9d are the same as the first embodiment.

### [FIFTH EMBODIMENT]

A fifth embodiment of the present invention will be described with reference to FIG. 13. The present embodiment is similar to the fourth embodiment, and the specifications of the rack teeth 10b are constant within the range of an entire axial length of the rack teeth 10b without change according to the axial position, and finish processing such as grinding processing is performed not only on an axial center portion (the tooth surface, an oblique lattice pattern portion in FIG. 13), but also on (the tooth surface) both axial end portions of the rack shaft 9e in which a specific stroke is constant, and a finish processed portion is provided on these portions (an oblique line pattern portion in FIG. 13).

The present embodiment is similar to the second embodiment, in which it is possible to improve returning performance of a steering wheel.

Other configurations and operations are similar to the first, second, and fourth embodiments.

### [SIXTH EMBODIMENT]

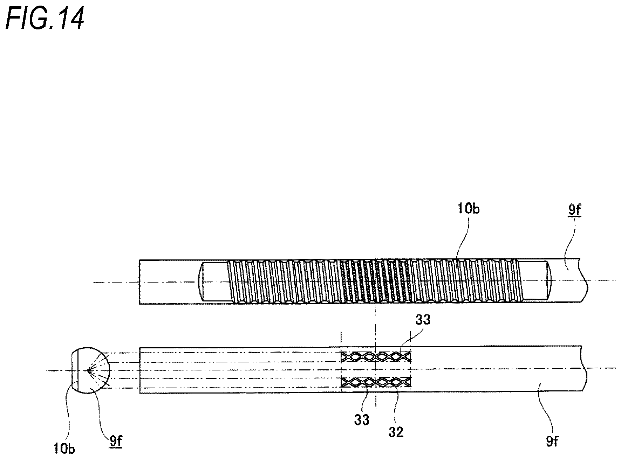

A sixth embodiment of the present invention will be described with reference to FIG. 14. The present embodiment is similar to the fourth embodiment, in which specifications of the rack teeth 10b are constant within the range of an entire axial length of the rack teeth 10b without change along the axial position, and a portion on the back surface of the rack shaft 9f axially matching with an axial center portion in which finish processing is performed where a specific stroke is constant, are provided with a recessed groove 32 for holding grease including a pair of oblique lattice shape recessed groove portions 33, 33.

In the present embodiment, similarly to the third embodiment, it is possible to appropriately maintain an operation characteristic of the steering gear unit in the vicinity of the center of the stroke over a long period of time.

Other configurations and operations are similar to the first, third, and fourth embodiments.

In the meantime, the present invention is not limited to the above embodiments and can be appropriately changed and improved.

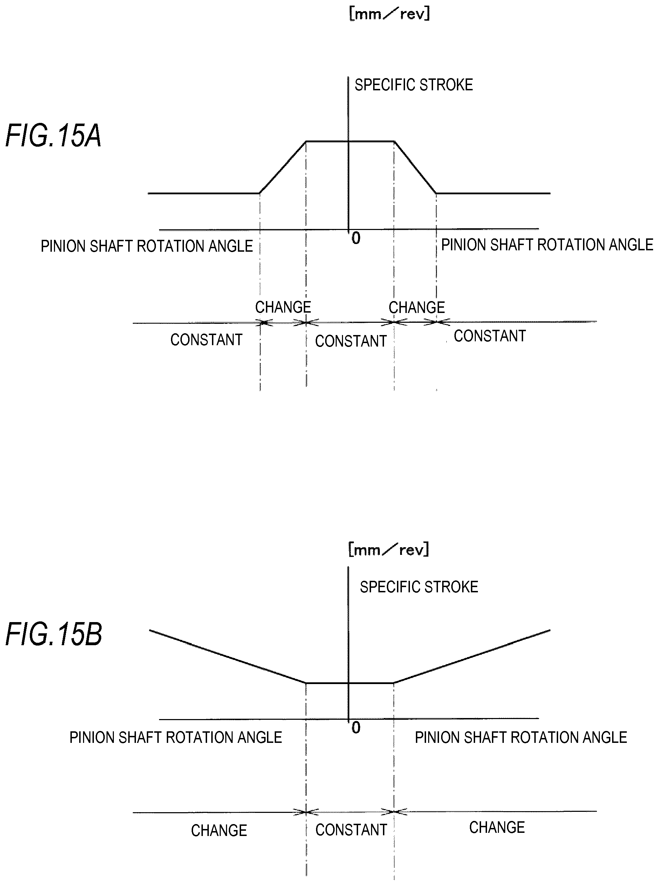

For example, as shown in FIG. 15A, the specific stroke is set to be constant with a higher value in the vicinity of the center of the stroke (steering center side), and the specific stroke at both ends of the stroke (steering end side) is set to be constant with a lower value, the specific stroke also may be set to change between the vicinity of the stroke center and the stroke end.

Further, as shown in FIG. 15B, the specific stroke in the vicinity of the center of the stroke may be set to be constant with a lower value and may be changed to be high specific stroke at the both ends of the stroke. In this case, as shown in FIG. 15B, at both ends of the stroke, there is no portion where the specific stroke is set to be constant. Although not shown in the drawing, a portion in which the specific stroke is constant may be set short at both end portions of the stroke.

In this case also, according to the specific stroke shown in FIG. 15A or FIG. 15B, the specifications (pitch between teeth, shape of tooth, inclination angle of the tooth trace, or the like) of the rack teeth 10a may be changed at the axial position.

### INDUSTRIAL APPLICABILITY

The present invention can be implemented by appropriately combining the structures of the above-described embodiments. For example, by combining the structures of the second embodiment and the third embodiment, or by combining the structures of the fifth embodiment and the sixth embodiment, a portion matching with both axial end portions of rack teeth of a back surface of a rack shaft also may be provided with the recessed grooves for holding grease. Also, the specific manufacturing method for forming the rack teeth by forging processing is not limited to the method shown in the embodiment while various conventionally known methods can be adopted, and any method can be used as long as it is classified as the forging processing. Similarly, the heat treatment and finish processing to be performed after the forging processing is not limited to the method shown in the embodiment, while various conventionally known methods can be adopted. When implementing the present invention, finish processing can be performed not only on the tooth surface (side surface), but also on a bottom portion and a tooth tip of the rack teeth.

### DESCRIPTION OF REFERENCE NUMERALS

1: Steering wheel
2: Steering shaft
3: Universal joint
4: Intermediate shaft
5, 5a: Steering gear unit
6: Input shaft
7: Tie rod
8, 8a: Pinion shaft
9, 9a~9f: Rack shaft
10, 10a, 10b: Rack teeth
11: Housing
12: Pressing unit
13a∼13c: First to third accommodating body
14: Pinion teeth
15a, 15b: Rolling bearing
16: Heat-treated hardened layer
17: Center side non-variable gear portion
18: End side non-variable gear portion
19: Variable gear portion
20: First intermediate material
21: Receiving die
22: Recessed groove portion
23: Pressing punch
24: Second intermediate material
25: Die
26: Holding hole
27: Bottom portion
28: Inner surface
29: Guide inclined surface portion
30: Tooth forming punch
31: Flat surface portion
32: Recessed groove
33: Oblique lattice shape recessed groove portion
34, 34a, 34b: Circumferential recessed groove portion
35, 35a, 35b: Axial recessed groove portion

## Claims

1. A manufacturing method of a rack shaft which includes rack teeth formed on an axial portion thereof, wherein a specific stroke is constant at least at a predetermined axial position of the rack teeth, the specific stroke corresponding to a movement amount of the rack shaft per rotation of a pinion shaft including pinion teeth to be meshed with the rack teeth, **characterised in that** the rack teeth are formed by forging processing, and after heat treatment is performed, a finish processing is performed only on an axial center portion in which the specific stroke is constant in the rack teeth.

2. A manufacturing method of a rack shaft which includes rack teeth formed on an axial portion thereof, wherein a specific stroke is constant at least at a predetermined axial position of the rack teeth, the specific stroke corresponding to a movement amount of the rack shaft per rotation of a pinion shaft including pinion teeth to be meshed with the rack teeth, **characterised in that** the rack teeth are formed by forging processing, and after heat treatment is performed, a finish processing is performed only on an axial center portion and both axial end portions in which the specific stroke is constant in the rack teeth.

3. The manufacturing method of a rack shaft according to claim 1 or 2,
wherein at a same time as forming the rack teeth, a recessed groove for holding grease is formed by the forging processing on a back surface of the rack shaft at a portion axially matching with a portion where the finish processing is performed.

4. The manufacturing method of a rack shaft according to any one of claims 1 to 3,
wherein the rack teeth include a variable gear portion in which the specific stroke changes.

5. The manufacturing method of a rack shaft according to any one of claims 1 to 3,
wherein the specific stroke is constant over an entire axial length of the rack teeth.

6. A rack shaft including rack teeth which is a forging processed portion at a portion in an axial direction, wherein a specific stroke is constant at least at a predetermined axial position of the rack teeth, the specific stroke corresponding to a movement amount of the rack shaft per rotation of a pinion shaft including pinion teeth meshed with the rack teeth, **characterised in that** a finish processed portion is provided only on an axial center portion, in which the specific stroke is constant, of the rack teeth in which a heat-treated hardened layer is formed at least on a surface layer portion.

7. A rack shaft including rack teeth which is a forging processed portion at a portion in an axial direction, wherein a specific stroke is constant at least at a predetermined axial position of the rack teeth, the specific stroke corresponding to a movement amount of the rack shaft per rotation of a pinion shaft including pinion teeth meshed with the rack teeth, **characterised in that** a finish processed portion is provided only on an axial center portion and both the axial end portions, in which the specific stroke is constant, in the rack teeth in which the heat-treated hardened layer is formed at least on a surface layer portion.

8. The rack shaft according to claim 6 or 7,
wherein a recessed groove for holding grease is provided on a back surface of the rack shaft at a portion axially matching with the finish processed portion provided on the rack teeth.

9. The rack shaft according to any one of claims 6 to 8,
wherein the rack teeth includes a variable gear portion in which the specific stroke changes.

10. The rack shaft according to any one of claims 6 to 8,
wherein the specific stroke is constant over the entire axial length of the rack teeth.

## Patentansprüche

1. Herstellungsverfahren einer Zahnstangenwelle, die Zahnstangenzähne umfasst, die auf einem axialen Abschnitt derselben ausgebildet sind, wobei zumindest in einer vorbestimmten axialen Position der Zahnstangenzähne ein spezifischer Hub konstant ist, wobei der spezifische Hub einem Bewegungsausmaß der Zahnstangenwelle pro Rotation einer Ritzelwelle entspricht, die Ritzelzähne umfasst, die mit den Zahnstangenzähnen in kämmenden Eingriff zu bringen sind,
**dadurch gekennzeichnet,**
**dass** die Zahnstangenzähne durch ein Schmiedeverfahren ausgebildet werden, und dass nach Ausführung einer Wärmebehandlung ein Oberflächenbehandlungsverfahren lediglich auf einem axialen Mittelabschnitt ausgeführt wird, in dem der spezifische Hub in den Zahnstangenzähnen konstant ist.

2. Herstellungsverfahren einer Zahnstangenwelle, die Zahnstangenzähne umfasst, die auf einem axialen Abschnitt derselben ausgebildet sind, wobei zumindest in einer vorbestimmten axialen Position der Zahnstangenzähne ein spezifischer Hub konstant ist, wobei der spezifische Hub einem Bewegungsausmaß der Zahnstangenwelle pro Rotation der Ritzelwelle entspricht, die Ritzelzähne umfasst, die mit den Zahnstangenzähnen in kämmenden Eingriff zu bringen sind,
**dadurch gekennzeichnet,**
**dass** die Zahnstangenzähne durch ein Schmiedeverfahren ausgebildet werden, und dass nach Ausführung einer Wärmebehandlung ein Oberflächenbehandlungsverfahren lediglich auf einem axialen Mittelabschnitt und auf beiden axialen Endabschnitten ausgeführt wird, in denen der spezifische Hub in den Zahnstangenzähnen konstant ist.

3. Herstellungsverfahren einer Zahnstangenwelle gemäß Anspruch 1 oder 2,
wobei zur selben Zeit, in der die Zahnstangenzähne ausgebildet werden, durch das Schmiedeverfahren eine vertiefte Nut zum Aufnehmen von Schmierfett auf einer hinteren Oberfläche der Zahnstangenwelle in einem Abschnitt ausgebildet wird, der axial zu einem Abschnitt passt, in dem das Oberflächenbehandlungsverfahren ausgeführt wird.

4. Herstellungsverfahren einer Zahnstangenwelle gemäß einem der Ansprüche 1 bis 3,
wobei die Zahnstangenzähne einen variablen Zahnradabschnitt umfassen, in dem sich der spezifische Hub ändert.

5. Herstellungsverfahren einer Zahnstangenwelle gemäß einem der Ansprüche 1 bis 3,
wobei der spezifische Hub über eine gesamte Axiallänge der Zahnstangenzähne konstant ist.

6. Zahnstangenwelle, umfassend Zahnstangenzähne, die ein durch Schmieden bearbeiteter Abschnitt in einem Abschnitt in eine axiale Richtung ist, wobei zumindest in einer vorbestimmten axialen Position der Zahnstangenzähne ein spezifischer Hub konstant ist, wobei der spezifische Hub einem Bewegungsausmaß der Zahnstangenwelle pro Rotation einer Ritzelwelle entspricht, die Ritzelzähne umfasst, die mit den Zahnstangenzähnen in kämmenden Eingriff zu bringen sind,
**dadurch gekennzeichnet,**
**dass** ein durch Oberflächenbehandlung bearbeiteter Abschnitt lediglich auf einem axialen Mittelabschnitt, in dem der spezifische Hub konstant ist, der Zahnstangenzähne vorgesehen ist, wobei zumindest auf einem Oberflächenschichtabschnitt eine wärmebehandelte, gehärtete Schicht ausgebildet ist.

7. Zahnstangenwelle, umfassend Zahnstangenzähne, die ein durch Schmieden bearbeiteter Abschnitt in einem Abschnitt in eine axiale Richtung ist, wobei zumindest in einer vorbestimmten axialen Position der Zahnstangenzähne ein spezifischer Hub konstant ist, wobei der spezifische Hub einem Bewegungsausmaß der Zahnstangenwelle pro Rotation einer Ritzelwelle entspricht, die Ritzelzähne umfasst, die mit den Zahnstangenzähnen in kämmenden Eingriff zu bringen sind,
**dadurch gekennzeichnet,**
**dass** ein durch Oberflächenbehandlung bearbeiteter Abschnitt lediglich auf einem axialen Mittelabschnitt und auf beiden axialen Endabschnitten, in denen der spezifische Hub konstant ist, in den Zahnstangenzähnen vorgesehen ist, wobei zumindest auf einem Oberflächenschichtabschnitt die wärmebehandelte gehärtete Schicht ausgebildet ist.

8. Zahnstangenwelle gemäß Anspruch 6 oder 7,
wobei eine vertiefte Nut zum Aufnehmen von Schmierfett auf einer hinteren Oberfläche der Zahnstangenwelle in einem Abschnitt vorgesehen ist, der axial zu dem durch Oberflächenbehandlung bearbeiteten Abschnitt passt, der auf den Zahnstangenzähnen vorgesehen ist.

9. Zahnstangenwelle gemäß einem der Ansprüche 6 bis 8,
wobei die Zahnstangenzähne einen variablen Zahnradabschnitt umfassen, in dem sich der spezifische Hub ändert.

10. Zahnstangenwelle gemäß einem der Ansprüche 6 bis 8,
wobei der spezifische Hub über die gesamte Axiallänge der Zahnstangenzähne konstant ist.

## Revendications

1. Procédé de fabrication d'un arbre de crémaillère qui comprend des dents de crémaillère formées sur une partie axiale de celui-ci, dans lequel une course spécifique est constante au moins dans une position axiale prédéterminée des dents de crémaillère, la course spécifique correspondant à une quantité de mouvement de l'arbre de crémaillère par rotation d'un arbre de pignon comprenant des dents de pignon à engrener avec les dents de crémaillère,
**caractérisé en ce que**
les dents de crémaillère sont formées par traitement de forgeage, et après l'exécution d'un traitement thermique, un traitement de finition est exécuté uniquement sur une partie centrale axiale dans laquelle la course spécifique est constante dans les dents de crémaillère.

2. Procédé de fabrication d'un arbre de crémaillère qui comprend des dents de crémaillère formées sur une partie axiale de celui-ci, dans lequel une course spécifique est constante au moins dans une position axiale prédéterminée des dents de crémaillère, la course spécifique correspondant à une quantité de mouvement de l'arbre de crémaillère par rotation d'un arbre de pignon comprenant des dents de pignon à engrener avec les dents de la crémaillère,
**caractérisé en ce que**
les dents de crémaillère sont formées par un traitement de forgeage et, après l'exécution d'un traitement thermique, un traitement de finition est exécuté uniquement sur une partie centrale axiale et les deux parties d'extrémité axiales dans lesquelles la course spécifique est constante dans les dents de crémaillère.

3. Procédé de fabrication d'un arbre de crémaillère selon la revendication 1 ou 2,
dans lequel en même temps que la formation des dents de crémaillère, une rainure évidée destinée à contenir de la graisse est formée par le traitement de forgeage sur une surface arrière de l'arbre de crémaillère au niveau d'une partie correspondant axialement à une partie où le traitement de finition est effectué.

4. Procédé de fabrication d'un arbre de crémaillère selon l'une quelconque des revendications 1 à 3,
dans lequel les dents de crémaillère comprennent une partie d'engrenage variable dans laquelle la course spécifique change.

5. Procédé de fabrication d'un arbre de crémaillère selon l'une quelconque des revendications 1 à 3,
dans lequel la course spécifique est constante sur toute la longueur axiale des dents de crémaillère.

6. Arbre de crémaillère comprenant des dents de crémaillère étant une partie traitée par forgeage au niveau d'une partie dans une direction axiale, dans lequel une course spécifique est constante au moins dans une position axiale prédéterminée des dents de crémaillère, la course spécifique correspondant à une quantité de mouvement de l'arbre de crémaillère par rotation d'un arbre de pignon comprenant des dents de pignon en engrènement avec les dents de crémaillère,
**caractérisé en ce que**
une partie traitée en finition est prévue uniquement sur une partie centrale axiale, dans laquelle la course spécifique est constante, des dents de crémaillère dans laquelle une couche durcie traitée thermiquement est formée au moins sur une partie de couche de surface.

7. Arbre de crémaillère comprenant des dents de crémaillère étant une partie traitée par forgeage au niveau d'une partie dans une direction axiale, dans lequel une course spécifique est constante au moins dans une position axiale prédéterminée des dents de crémaillère, la course spécifique correspondant à une quantité de mouvement de l'arbre de crémaillère par rotation d'un arbre de pignon comprenant des dents de pignon en engrènement avec les dents de crémaillère,
**caractérisé en ce que**
une partie traitée en finition est prévue uniquement sur une partie centrale axiale et sur les deux parties d'extrémité axiales, dans lesquelles la course spécifique est constante, dans les dents de crémaillère dans lesquelles la couche durcie traitée thermiquement est formée au moins sur une partie de couche de surface.

8. Arbre de crémaillère selon la revendication 6 ou 7,
dans lequel une rainure évidée destinée à contenir de la graisse est prévue sur une surface arrière de l'arbre de crémaillère au niveau d'une partie correspondant axialement à la partie traitée en finition prévue sur les dents de crémaillère.

9. Arbre de crémaillère selon l'une quelconque des revendications 6 à 8,
dans lequel les dents de crémaillère comprennent une partie d'engrenage variable dans laquelle la course spécifique change.

10. Arbre de crémaillère selon l'une des revendications 6 à 8,
dans lequel la course spécifique est constante sur toute la longueur axiale des dents de crémaillère.
